# FASCICULE DE BREVET EUROPEEN

(11) **EP 1 006 285 B1**
(45) Date de publication et mention de la délivrance du brevet: **09.03.2005**
(21) Numéro de dépôt: 99402937.9
(22) Date de dépôt: 25.11.1999
(51) Int. Cl.: F16C 1/22, B60T 7/10

(54) **Dispositif de rattrapage automatique de jeu, notamment sur câble de commande d'un frein de stationnement pour véhicule automobile**
Selbsteinstellbare Seilzugeinrichtung, Anwendung in einer Feststellbremse eines Fahrzeugs
Self adjusting device, application to vehicle parking brake control cable

(30) Priorité: 03.12.1998 FR 9815303
(43) Date de publication de la demande: 07.06.2000
(73) Titulaire: AUTOMOBILES PEUGEOT, 75116 Paris (FR); AUTOMOBILES CITROEN, 92200 Neuilly-sur-Seine (FR)
(72) Inventeur: Castin, Michel, 78120 Rambouillet (FR)
(74) Mandataire: Peaucelle, Chantal

(56) Documents cités:
- EP-A- 0 040 574
- WO-A-98/42990
- DE-U- 29 721 843

## Description

La présente invention est relative à un dispositif permettant un rattrapage automatique du jeu sur les câbles de commande d'un frein de stationnement d'un véhicule automobile.

Un frein de stationnement de ce type comprend, de façon usuelle, un levier de manoeuvre apte, à l'arrêt du véhicule, à être actionné par le conducteur et placé à cet effet à proximité de celui-ci, ce levier, en pivotant autour d'un axe fixe, provoquant une traction sur des câbles ainsi mis sous tension. Ces câbles, dont une extrémité est solidarisée d'un palonnier entraîné par le basculement du levier de commande, agit sur les tambours ou disques de frein équipant les roues arrière du véhicule.

Pour diverses raisons, notamment du fait du tassement de la gaine de ces câbles et de leur allongement en raison des sollicitations inévitables (matage, déformations plastiques, etc...) durant la vie du véhicule, voire plus encore du fait de l'usure de ces câbles, ceux-ci se détendent partiellement en produisant un jeu réduisant la tension des câbles et qu'il est donc nécessaire de rattraper en permanence pour maintenir cette tension à une valeur sensiblement constante et appropriée au cours du temps.

Diverses solutions pour permettre un rattrapage automatique du jeu ainsi constaté sur les câbles du frein de stationnement, en particulier afin d'éviter des réglages périodiques immobilisant le véhicule et entraînant des frais non négligeables, ont déjà été envisagées.

Ainsi, selon le EP-A-0 317 117, on dispose le levier et le palonnier auquel est fixée l'extrémité des câbles et sur lequel agit ce levier, sur un chariot normalement immobilisé le long d'une glissière à crans montée sur le plancher de l'habitacle du véhicule au moyen d'un premier cliquet, ce chariot étant soumis à la tension d'un ressort qui exerce en permanence un effort sur les câbles. Ce ressort est choisi tel qu'il puisse rattraper le jeu des câbles mais ne soit pas suffisant pour actionner le frein, le levier de commande agissant sur le palonnier étant lui-même muni d'un second cliquet d'immobilisation pouvant être relâché au moyen d'un bouton de déverrouillage prévu sur le levier.

Ce système est compliqué et exige de nombreuses pièces pour sa réalisation, les cliquets mis en oeuvre étant en outre des éléments relativement fragiles, comportant un risque de rupture susceptible d'entraîner la mise hors service du frein.

Le FR-A-2 710 428 se rapporte à un autre mécanisme de commande d'un frein de stationnement, de conception plus simple que le précédent mais qui n'élimine pas l'inconvénient précité, ce mécanisme envisageant à nouveau l'utilisation d'un cliquet permettant de rattraper le jeu par ajustement de la position du palonnier selon la longueur d'une glissière à crans coopérant avec ce cliquet.

Ce mécanisme exige notamment deux câbles distincts, l'un relié au levier, l'autre au frein, ces câbles étant réunis par une pièce de liaison comprenant des ressorts et des moyens de blocage pour rattraper le jeu constaté.

Enfin le document EP-A-0 040 574 décrit un dispositif de rattrapage de jeu selon le préambule de la revendication 1.

La présente invention a pour objet un dispositif automatique de conception très simple, qui élimine l'usage de tout cliquet et présente de ce fait une grande robustesse et une fiabilité largement améliorée vis-à-vis de celle des solutions connues telles que rappelées ci-dessus.

A cet effet, ce dispositif, comportant d'une part un levier de commande agissant sur un étrier pivotant sur lequel est articulée une extrémité d'un tirant comprenant dans sa surface externe un empilage de parties tronconiques en saillie formant, dans la partie courante de ce tirant, des crans d'arrêt successifs, d'autre part un palonnier librement traversé par le tirant et muni de moyens d'accrochage d'au moins un câble de traction apte à agir sur un tambour ou un disque de frein d'un véhicule automobile, et enfin un ressort de compression en spirale monté autour du tirant et en appui sur une butée réglable immobilisée sur l'extrémité du tirant opposée au palonnier, se caractérise en ce que le palonnier est appliqué contre un écrou présentant un empilage de parties tronconiques internes, cet écrou étant fendu et diamétralement en deux parties, assemblées l'une à l'autre par un jonc annulaire autorisant un écartement élastique de ces deux parties de manière à permettre le passage des parties tronconiques internes de l'écrou sur un ou plusieurs crans d'arrêt consécutifs du tirant, suite à l'effort de poussée constant exercé sur l'écrou par le ressort de compression, disposé entre cet écrou et la butée réglable du tirant.

Le dispositif proposé, associé au tirant par rapport auquel peut se déplacer l'écrou fendu en appui sur le palonnier pour ajuster la tension du câble du frein, permet de récupérer en permanence les jeux de ce câble, en soumettant ce dernier à un effort constant, ceci sans aucune intervention sur la course du levier de commande lui-même. L'ensemble est compact, facile à monter sur le véhicule et n'exige, une fois sa mise en place effectuée, aucune opération particulière de réglage.

Selon une autre caractéristique, la butée réglable est constituée par un écrou frein, vissé sur un filetage ménagé à cet effet sur l'extrémité du tirant, et par une rondelle sur laquelle s'appuie le ressort de compression.

Selon une autre caractéristique également, le jonc annulaire est constitué par une bague métallique présentant une relative élasticité, les crans d'arrêt du tirant coopérant avec les parties tronconiques internes de l'écrou fendu en deux parties étant légèrement couchés sur le tirant, dans la direction longitudinale de celui-ci vers le palonnier, de manière à faciliter le passage de l'écrou d'un cran au suivant.

Avantageusement, la tension du ressort de compression est réglée initialement par le vissage de l'écrou frein de la butée, de manière à produire un effort sur le palonnier par l'intermédiaire de l'écrou fendu qui soit toujours inférieur à la traction qui s'exerce sur le câble lorsque le levier de commande est en position relâchée.

D'autres caractéristiques d'un dispositif de rattrapage automatique de jeu, établi conformément à l'invention, apparaîtront encore à travers la description qui suit d'un exemple de réalisation, donné à titre indicatif et non limitatif, en référence au dessin annexé sur lequel :
- La Figure 1 est une vue en perspective du dispositif considéré.
- La Figure 2 est une vue en coupe de ce dispositif selon l'axe du tirant entrant dans la réalisation de celui-ci.

Sur ces figures, la référence 1 désigne l'ensemble du dispositif de rattrapage de jeu selon l'invention, lequel comporte principalement un tirant allongé 2 comprenant à une extrémité un pivot 3 d'articulation pour un étrier 4.

A ce dernier est lié un levier de commande (non représenté), agencé de façon en elle-même connue de sorte que le basculement de ce levier actionné par le conducteur du véhicule à l'arrêt provoque une rotation de l'étrier 4, se traduisant par un effort de traction sur le tirant 2, s'exerçant sensiblement selon la direction longitudinale de celui-ci.

Le tirant 2 traverse librement un trou de passage 5 prévu dans la face avant 6 d'un palonnier 7, lequel s'étend transversalement de part et d'autre du tirant et comporte, de chaque côté, une fente 8 pour le passage de l'embout d'un câble (également non représenté), cet embout venant se disposer derrière la face 6 du palonnier 7, au droit d'une pièce d'arrêt 9, en étant ainsi immobilisé contre le palonnier.

Dans l'exemple de réalisation représenté, le palonnier comporte deux fentes 8 pour le montage de deux câbles parallèles, s'étendant de part et d'autre du tirant 2.

Le tirant 2 comporte, dans son extrémité opposée au pivot d'articulation 3 de l'étrier 4, une partie filetée 10 sur laquelle est vissé un écrou frein 11, la position de celui-ci sur le tirant étant ainsi réglable.

L'écrou 11 est par ailleurs associé à une rondelle 12 appliquée contre l'écrou et servant d'épaulement d'appui pour l'extrémité d'un ressort de compression en spirale 13, monté autour du tirant 2.

Conformément à l'invention, le tirant 2 comporte, dans sa partie courante, un empilage de parties tronconiques en saillie qui forment sur la surface extérieure de ce tirant des crans d'arrêt successifs 14, destinés à coopérer avec des parties tronconiques internes correspondantes 15 d'un écrou 16 permettant d'assurer en permanence le rattrapage du jeu dans les câbles soumis à l'effort de traction du palonnier.

Bien que le terme "écrou" désigne habituellement une pièce comportant un filetage interne, c'est par analogie, à cause de la ressemblance entre l'empilement des parties tronconiques et un filetage, que la pièce 16 est appelée "écrou" dans la présente description.

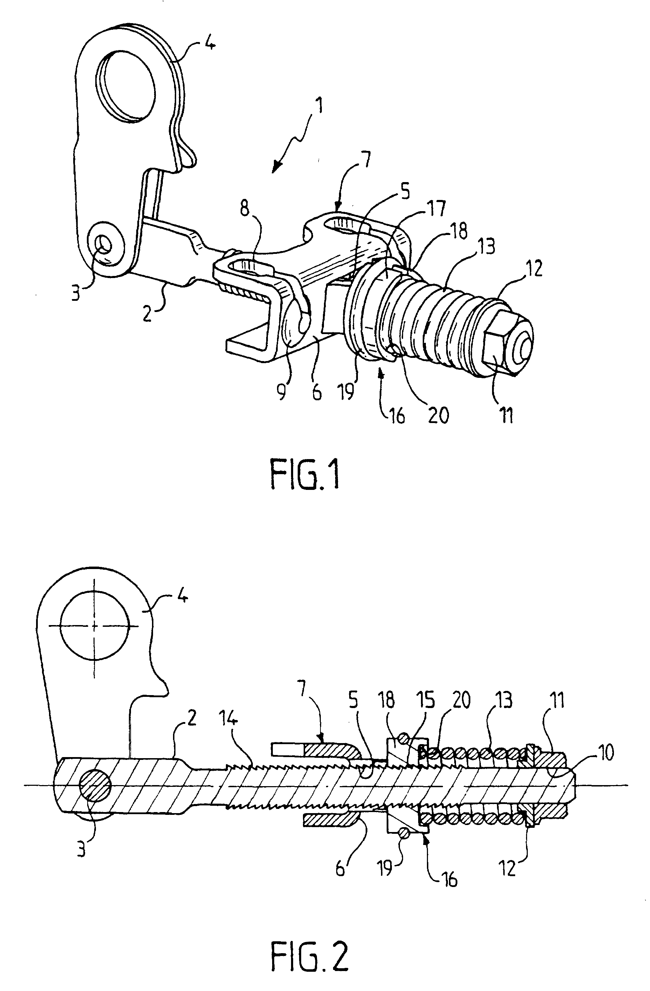

Comme on le voit plus clairement sur la Figure 1, l'écrou 16 est fendu diamétralement de manière à former deux parties 17 et 18, accolées l'une à l'autre sur le tirant 2 et maintenues serrées sur celui-ci grâce à un jonc annulaire 19 qui enserre les deux parties 17 et 18 de l'écrou 16 par l'extérieur et font ainsi pénétrer les crans 14 du tirant dans les parties tronconiques internes 15 de l'écrou. Notamment, ces crans sont de préférence légèrement couchés sur la direction longitudinale du tirant en direction du palonnier 7, afin de faciliter le passage de l'écrou d'un cran du tirant au suivant.

On notera à ce propos que l'orientation des parties tronconiques 14 et 15 (qui présentent une face inclinée vers l'extérieur du tirant et vers l'étrier 4 suivie d'une face plane perpendiculaire à l'axe du tirant) permet à l'écrou 16 de se déplacer de la droite vers la gauche en regardant la figure 2 (donc dans le sens d'augmentation de la tension des câbles), mais pas en sens inverse.

Dans le mode de réalisation considéré, le jonc annulaire est un jonc métallique réalisé dans un métal présentant une élasticité suffisante pour permettre un écartement des deux parties 17 et 18 de l'écrou 16 dans les conditions précisées ci-après. En variante, le jonc pourrait être réalisé dans un autre matériau pour autant qu'il présente une résistance mécanique appropriée.

L'écrou 16 est ainsi en permanence appliqué contre le palonnier 7 par le ressort de compression 13 monté entre la rondelle de butée 12 et un logement en creux 20 prévu dans la face en regard des deux parties 17 et 18 de l'écrou.

Au montage, le frein de stationnement étant desserré, la tension des câbles est ajustée de sorte qu'aucune action ne soit exercée sur les tambours ou disques de frein du véhicule, auxquels les extrémités opposées de ces câbles sont reliées. Avantageusement d'ailleurs, les extrémités des câbles situées du côté des roues arrière sont soumises à l'effort antagoniste de moyens de rappel, en eux-mêmes connus. En outre, la tension du ressort de compression est réglée de manière à être toujours inférieure à l'effort de rappel.

Le rattrapage du jeu dans les câbles est obtenu à l'aide de l'écrou fendu 16 soumis à l'effort du ressort de compression 13, ce dernier permettant, du fait de la poussée qu'il exerce sur cet écrou, d'écarter légèrement les deux parties 17 et 18 de l'écrou à l'encontre du jonc élastique 19 et de faire franchir aux parties tronconiques 15 un ou plusieurs des crans successifs 14 prévus sur le tirant 2, en fonction de l'effort créé par le ressort 13 et de la valeur du jeu à rattraper sur les câbles du frein.

Le dispositif permet ainsi de récupérer en permanence le jeu des câbles et de maintenir sur ceux-ci une tension constante.

Notamment, et durant toute la vie du véhicule, le dispositif évite tout allongement de la course du levier de commande du frein, en éliminant les vibrations de ce levier ou du palonnier à l'intérieur de l'habitacle et le bruit pouvant en résulter. Ce dispositif évite également les allumages intempestifs du voyant de contrôle habituellement prévu pour informer le conducteur sur l'état serré ou non du frein de stationnement et ne rend plus nécessaires les réglages après vente sur cette partie du véhicule.

Ce dispositif est simple et robuste. Il peut être facilement mis en place dans la ligne de montage du véhicule en procurant un gain de temps du fait de la suppression d'opérations particulières pour le réglage de la tension, celle-ci étant obtenue automatiquement à une valeur déterminée une fois pour toutes par le réglage initial de l'écrou 11 et de sa rondelle de butée 12 sur laquelle est appliqué le ressort de compression 13.

Bien entendu, il va de soi que l'invention ne se limite pas à l'exemple de réalisation plus spécialement décrit ci-dessus en référence aux dessins annexés ; elle en embrasse au contraire toutes les variantes. En particulier, le palonnier sur lequel agit l'écrou fendu pourrait avoir une forme différente, en étant réuni par un câble unique à un autre palonnier de renvoi sur les deux câbles respectivement reliés aux tambours ou aux disques des deux roues arrière du véhicule.

## Revendications

1. Dispositif de rattrapage automatique de jeu, notamment pour câble de commande d'un frein de stationnement de véhicule automobile, comportant d'une part un levier de commande agissant sur un étrier pivotant (4) sur lequel est articulée une extrémité d'un tirant (2) comprenant dans sa surface externe un empilage de parties tronconiques en saillie formant, dans la partie courante de ce tirant, des crans d'arrêt successifs (14), d'autre part un palonnier (7) muni de moyens (8, 9) d'accrochage d'au moins un câble de traction apte à agir sur un tambour ou un disque de frein du véhicule, un ressort de compression en spirale (13) monté autour du tirant et en appui sur une butée (11, 12), immobilisée sur l'extrémité (10) du tirant opposée au palonnier, un écrou (16) présentant un empilage de parties tronconiques internes, cet écrou étant fendu et diamétralement en deux parties (17, 18), assemblées l'une à l'autre par un jonc annulaire (19) autorisant un écartement élastique de ces deux parties de manière à permettre le passage des parties tronconiques internes (15) de l'écrou sur un ou plusieurs crans d'arrêt consécutifs (14) du tirant (2), suite à l'effort de poussée constant exercé sur l'écrou par le ressort de compression, disposé entre cet écrou et la butée du tirant **caractérisé en ce que** le palonnier est appliqué contre l'écrou (16) et est librement traversé par le tirant (2), et **en ce que** la butée (11, 12) est réglable.

2. Dispositif selon la revendication 1, **caractérisé en ce que** la butée réglable est constituée par un écrou frein (11), vissé sur un filetage (10) ménagé à cet effet sur l'extrémité du tirant, et par une rondelle (12) sur laquelle s'appuie le ressort de compression (13).

3. Dispositif selon l'une des revendications 1 ou 2, **caractérisé en ce que** le jonc annulaire (19) est constitué par une bague métallique présentant une relative élasticité.

4. Dispositif selon l'une quelconque des revendications 1 à 3, **caractérisé en ce que** les crans d'arrêt (14) du tirant (2) coopérant avec les parties tronconiques internes de l'écrou (16) fendu en deux parties sont légèrement couchés sur le tirant dans la direction longitudinale de celui-ci vers le palonnier (7).

## Patentansprüche

1. Selbstnachstellende Vorrichtung, insbesondere für ein Betätigungskabel für eine Feststellbremse eines Kraftfahrzeuges mit einerseits einem Betätigungshebel, der auf einen schwenkbaren Bügel (4) einwirkt, an dem ein Ende einer Spannstange (2) angelenkt ist, die auf ihrer Außenoberfläche eine Aneinanderreihung von kegelstumpfartig hervorspringenden Abschnitten besitzt, die in dem laufenden Abschnitt dieser Spannstange aufeinanderfolgende Arretierungsrasten (14) besitzt, mit andererseits einem Steuerhebel (7), der mit Mitteln (8, 9) zum Befestigen mindestens eines Zugseiles, das auf eine Trommelbremse oder eine Scheibenbremse des Kraftfahrzeuges einwirken kann, ausgestattet ist, mit einer Spiraldruckfeder (13), die um die Spannstange verläuft und gegen einen Anschlag (11, 12), der an dem dem Steuerhebel gegenüberliegenden Ende (10) der Zugstange fest angebracht ist, und mit einer Mutter (16), die eine Aneinanderreihung von inneren kegelstumpfförmigen Abschnitten besitzt, wobei diese Mutter diametral in zwei Abschnitte (17, 18) unterteilt ist, die miteinander durch eine ringförmige Verbindung (19) verbunden sind, welche eine elastische Entfernung dieser beiden Abschnitte derart ermöglicht, dass der Durchtritt der inneren kegelstumpfartigen Abschnitte (15) der Mutter zu einer oder mehreren der aufeinanderfolgenden Arretierungsrasten (14) der Spannstange (2) in Folge der konstanten Druckkraft ermöglicht, die durch die zwischen dieser Mutter und dem Anschlag der Spannstange angeordneten Druckfeder auf die Mutter ausgeübt wird, **dadurch gekennzeichnet, dass** der Steuerhebel gegen die Mutter (16) drückt und frei von der Spannstange durchdrungen wird und dass der Anschlag (11, 12) einstellbar ist.

2. Vorrichtung nach Anspruch 1,
**dadurch gekennzeichnet,**
**dass** der einstellbare Anschlag aus einer Bremsanziehschraube (11), die auf ein zu diesem Zweck auf das Ende der Spannstange angebrachtes Gewinde (10) aufgeschraubt ist, und einer Unterlegscheibe (12), gegen die die Druckfeder (13) drückt, besteht.

3. Vorrichtung nach Anspruch 1 oder 2,
**dadurch gekennzeichnet,**
**dass** die ringförmige Verbindung (19) aus einem Metallring mit einer relativen Elastizität besteht.

4. Vorrichtung nach einem der Ansprüche 1 bis 3,
**dadurch gekennzeichnet,**
**dass** die Arretierungsrasten (14) der Spannstange (2), die mit den inneren kegelstumpfartigen Abschnitten der in zwei Abschnitte unterteilten Mutter (16) kooperieren, auf der Spannstange in der Längsrichtung von dieser zu dem Steuerhebel (7) hin leicht schief stehen.

## Claims

1. Automatic play compensation device, in particular for a control cable of a motor vehicle parking brake, comprising on the one hand a control lever acting on a hinged calliper (4) on which is hinged one end of a pull rod (2) comprising on its external surface a series of projecting tapered parts forming, on the main section of this pull rod, successive stop notches (14), and on the other hand a cross-bar (7) freely passed through by the pull rod equipped with means (8, 9) for hooking at least one traction cable designed to act on a drum or a brake disc of the vehicle, a spiral compression spring (13) mounted around the pull rod and resting on a stop (11, 12) immobilized on the opposite end (10) of the pull rod to the cross-bar, a nut (16) having a series of internal tapered parts, this nut being split and diametrically in two parts (17, 18), joined to each other by a spring ring (19) allowing for the elastic separation of these two parts so as to allow the passage of the internal tapered parts (15) of the nut on one or more consecutive stop notches (14) of the pull rod (2), as a result of the constant thrust exerted on the nut by the compression spring, arranged between this nut and the stop of the pull rod, **characterized in that** the cross-bar is brought to bear on the nut (16) and is freely passed through by the pull rod (2), and **in that** the stop (11, 12) is adjustable.

2. Device according to claim 1, **characterized in that** the adjustable stop is made up of a locknut (11), screwed onto a thread (10) arranged for this purpose on the end of the pull rod, and a washer (12) on which the compression spring rests (13).

3. Device according to one of claims 1 or 2, **characterized in that** the spring ring (19) is made up of a metal ring having relative elasticity.

4. Device according to any one of claims 1 to 3, **characterized in that** the stop notches (14) of the pull rod (2) cooperating with the internal tapered parts of the nut (16) split into two parts are slightly inclined on the pull rod in the longitudinal direction of the latter towards the cross-bar (7).
